(19) Europäisches Patentamt
European Patent Office
Office européen des brevets

(11) EP 4 560 564 A1

(12) EUROPEAN PATENT APPLICATION
published in accordance with Art. 153(4) EPC

(43) Date of publication:
28.05.2025 Bulletin 2025/22

(51) International Patent Classification (IPC):
G06Q 50/06 (2024.01)

(21) Application number: 23842612.6

(22) Date of filing: 01.03.2023

(52) Cooperative Patent Classification (CPC):
G06Q 50/06

(86) International application number:
PCT/JP2023/007576

(87) International publication number:
WO 2024/018675 (25.01.2024 Gazette 2024/04)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 19.07.2022 JP 2022114820

(71) Applicant: Hitachi, Ltd.
Tokyo 100-8280 (JP)

(72) Inventors:
• NAKANO, Michiki
Tokyo 100-8280 (JP)
• KUMAGAI, Masatoshi
Tokyo 100-8280 (JP)
• FUKAMI, Misato
Tokyo 100-8280 (JP)

(74) Representative: Mewburn Ellis LLP
Aurora Building
Counterslip
Bristol BS1 6BX (GB)

(54) **CHARGING MANAGEMENT SYSTEM AND CHARGING MANAGEMENT METHOD**

(57) Provided is a charging management system including a processor and a storage device, where the storage device holds delivery information including a delivery plan for an electric vehicle, power-efficiency information for the electric vehicle, facility information regarding facilities included in a delivery route for the electric vehicle, and charger information regarding a specification of a charger installed at the facility, the facility information includes a unit price of a power supplied to the facility, a charging price that is a unit price of a power provided by the charger installed at the facility, and a target value of profit obtained by providing power by the charger, and the processor estimates a charging amount by the charger for a predetermined future period based on the delivery information, the power-efficiency information, and the charger information, and calculates an upper limit of a power consumption amount of the facility in a predetermined time frame including a current time based on the estimated charging amount and the facility information so that the target value of the profit is ensured.

[FIG. 1]

## Description

Incorporated by Reference

This application claims priority to Japanese Patent Application No. 2022-114820, filed on July 19, 2022, the contents of which are incorporated herein by reference.

Technical Field

The present invention relates to a charging management system that manages power demand of a building and a charging amount of an electric vehicle, and calculates an appropriate upper limit of power consumption of the building.

Background Art

JP2018-191471A (PTL 1) is known as background art in the technical field. PTL 1 describes a charging control method providing a charging control method for an electric vehicle that can efficiently and low-costly rapid charge a plurality of electric vehicles while suppressing power peaks due to rapid charging.

Citation List

Patent Literature

PTL 1: JP2018-191471A

Summary of Invention

Technical Problem

The technology described in PTL 1 provides a charging control method for an electric vehicle that can efficiently and low-costly rapid charge a plurality of electric vehicles while suppressing power peaks due to rapid charging. However, with the technology described in PTL 1, contracted power corresponding to the power peak is fixed, so when an actual charging amount is greater than an assumed total charging amount at the time of design, it is not possible to improve convenience for an electric vehicle user by setting the power peak higher and increasing the charging amount for the electric vehicle. Conversely, when the actual charging amount is less than the assumed total charging amount, it is not possible to avoid a deterioration in profitability of a charging service by lowering the power peak.

The present invention is made in consideration of such problems, and an object thereof is to provide a system and method that predicts a future total charging amount of electric vehicles (EVs) of charger users when a power peak is expected to exceed an assumed value, calculates a power upper limit that ensures economic viability for a building that provides a charging environment, and controls a charging amount of the charger.

Solution to Problem

A representative example of the invention disclosed in the present application is as follows. In other words, there is provided a charging management system including a processor and a storage device, where the storage device holds delivery information including a delivery plan for an electric vehicle, power-efficiency information for the electric vehicle, facility information regarding facilities included in a delivery route for the electric vehicle, and charger information regarding a specification of a charger installed at the facility for charging the electric vehicle, the facility information includes a unit price of a fee paid to a power supplier for power supplied to the facility, a charging price that is a unit price of a fee received from a charging power receiver for power provided by the charger installed at the facility to charge the electric vehicle, and a target value of profit obtained by providing power by the charger, and the processor estimates a charging amount by the charger for a predetermined future period based on the delivery information, the power-efficiency information, and the charger information, and calculates an upper limit of a power consumption amount of the facility in a predetermined time frame including a current time based on the estimated charging amount and the facility information so that the target value of the profit is ensured.

Advantageous Effects of Invention

According to one aspect of the present invention, a building owner who provides a charging service can improve convenience of a user who charges an electric vehicle while ensuring profitability of the service. Problems, configurations, and effects other than those described above will be made clear through the description of the following embodiments.

Brief Description of Drawings

[Fig. 1] Fig. 1 is a block diagram illustrating an example of a charging management system according to a first embodiment of the present invention.
[Fig. 2] Fig. 2 is an explanatory diagram illustrating an example of a configuration of route delivery data according to the first embodiment of the present invention.
[Fig. 3] Fig. 3 is an explanatory diagram illustrating an example of a configuration of power-efficiency data according to the first embodiment of the present invention.
[Fig. 4] Fig. 4 is an explanatory diagram illustrating an example of a configuration of charger data according to the first embodiment of the present invention.

[Fig. 5] Fig. 5 is an explanatory diagram illustrating an example of a configuration of facility data according to the first embodiment of the present invention.

[Fig. 6] Fig. 6 is a flowchart illustrating processing in the charging management system according to the first embodiment of the present invention.

[Fig. 7] Fig. 7 is a flowchart illustrating a detail of processing by a power consumption amount prediction unit according to the first embodiment of the present invention.

[Fig. 8] Fig. 8 is an explanatory diagram illustrating an example of transition of accumulated power consumption amount based on power consumption collected from a charger and a power meter according to the first embodiment of the present invention.

[Fig. 9] Fig. 9 is a flowchart illustrating a detail of processing by a total path charging amount estimation unit according to the first embodiment of the present invention.

[Fig. 10] Fig. 10 is a flowchart illustrating a detail of processing by a power upper limit calculation unit according to the first embodiment of the present invention.

[Fig. 11] Fig. 11 is an explanatory diagram illustrating an example of a comparison between a predicted power consumption amount and a power upper limit value in the first embodiment of the present invention.

[Fig. 12] Fig. 12 is a block diagram illustrating an example of a charging management system according to a second embodiment of the present invention.

[Fig. 13] Fig. 13 is a flowchart illustrating processing in a charging management system according to a third embodiment of the present invention.

[Fig. 14] Fig. 14 is an explanatory diagram illustrating an example of information presented to an energy manager by the charging management system according to the third embodiment of the present invention.

Description of Embodiments

Hereinafter, an embodiment of the present invention will be described with reference to the drawings.

[First Embodiment]

In the present embodiment, an example of a charging management system that can provide a charging service without losing economic viability of the charging service by receiving a delivery plan from a logistics company, estimating a future charging amount at a delivery destination building, and calculating an appropriate power upper limit value will be described.

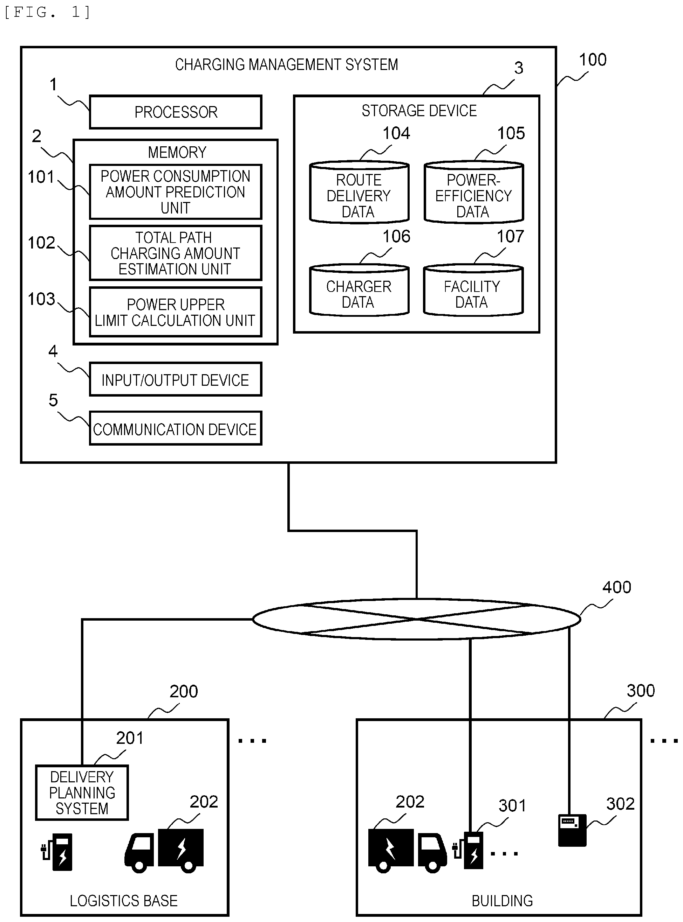

Fig. 1 is a block diagram illustrating an example of a charging management system 100 according to a first embodiment of the present invention.

The charging management system 100 is connected, via a network 400, to a delivery planning system 201 that manages delivery plans for logistics trucks at a logistics base 200 of a logistics company, a building 300 in which chargers for electric vehicles 202 are installed, chargers 301, and a power meter 302 that measures the total energy consumption of the building 300 in which the chargers are installed. In the present embodiment, at least some of the logistics trucks used by the logistics company are electric vehicles 202.

The charging management system 100 collects future delivery plans of the logistics company and the power efficiency of the electric vehicle 202 from the delivery planning system 201, collects a charging amount to the electric vehicle 202 from the charger 301, and collects the total power consumption of the building 300 in which the charger is installed from the power meter 302.

Route delivery data 104 stores delivery plans collected from the logistics company. Power-efficiency data 105 stores information regarding the power efficiency of the electric vehicle 202 managed by the logistics base 200. Charger data 106 stores information regarding specification of the charger 301 installed in the building 300. Facility data 107 stores information regarding an electricity contract and the charging service of the building 300 in which the charger 301 is installed. The logistics base 200 and the building 300 may each be a plurality of business companies and a plurality of buildings. There may be a plurality of chargers 301 within the building 300.

The charging management system 100 is a computer including a processor 1, a memory 2, a storage device 3, an input/output device 4, and a communication device 5.

The processor 1 is a calculation device that executes programs stored in the memory 2. Some of the processing performed by the processor 1 by executing programs may be executed by another calculation device (for example, hardware such as ASIC or FPGA). The processor 1 operates as a functional unit that provides specific functions by executing processing according to a program of each functional unit. The same applies to other programs. The charging management system 100 is a computer and computer system that include functional units realized by the processor 1.

The memory 2 includes ROM, which is a non-volatile storage element, and RAM, which is a volatile storage element. The ROM stores immutable programs (for example, BIOS) and the like. The RAM is a high-speed volatile storage element such as a dynamic random access memory (DRAM), and temporarily stores programs executed by the processor 1 and data used when the programs are executed. For example, a power consumption amount prediction unit 101, a total path charging amount estimation unit 102, and a power upper limit calculation unit 103 are loaded into the memory 2 as programs and executed by the processor 1.

The storage device 3 is, for example, a large-capacity non-volatile storage device such as a magnetic storage device (HDD) or a flash memory (SSD). The storage device 3 stores data used by the processor 1 when executing a program (for example, the route delivery data 104, the charger data 106, the power-efficiency data 105, and the facility data 107), and the program executed by the processor 1. In other words, the program is read from the storage device 3, loaded into the memory 2, and executed by the processor 1.

The power consumption amount prediction unit 101 receives the charging amount from the charger 301 and the total energy consumption of the building 300 from the power meter 302, and predicts the power consumption amount in the building 300 for a 30-minute time frame including the current time. For example, when the current time is 9:10, the power consumption amount from 9:00 to 9:30 is predicted. When the current time is 9:33, the power consumption amount from 9:30 to 10:00 is predicted.

In the present embodiment, a 30-minute time frame is illustrated as an example of a predetermined time frame, but the predetermined time period may be a time length other than 30 minutes (for example, 10 minutes or 1 hour).

The total path charging amount estimation unit 102 receives route delivery data and information on the power efficiency of the electric vehicle 202 from the delivery planning system 201, and estimates the future total charging amount in the building 300 in which the charger 301 is installed. When there are a plurality of logistics bases 200 and a plurality of delivery planning systems 201, the total path charging amount estimation unit 102 receives route delivery data and information on the power efficiency of the electric vehicle 202 from each delivery planning system 201. When there are a plurality of buildings 300, the total path charging amount estimation unit 102 estimates the total charging amount by the chargers installed in each building 300.

The power upper limit calculation unit 103 receives the future total charging amount of charging in the building 300 in which the charger 301 is installed from the total path charging amount estimation unit 102, receives the charging amount of the electric vehicle 202 from the charger 301, receives the power demand from the power meter 302 of the building 300 in which the charger 301 is installed, and calculates a power upper limit value of the building 300 that can ensure the economic viability of the charging service. When there are a plurality of buildings 300, the power upper limit calculation unit 103 calculates a power upper limit value for each building.

The charging management system 100 may include the input/output device 4 as an input interface and an output interface. The input interface is an interface to which input devices such as a keyboard and a mouse (not illustrated) are connected and which receives input from an operator. The output interface is an interface to which an output device such as a display device or a printer (not illustrated) is connected and which outputs results of program execution in a format visible to the operator. Another device connected to the charging management system 100 via the network 400 may provide the input/output device.

The program executed by the processor 1 is provided to the charging management system 100 from a removable medium (for example, a CD-ROM or a flash memory) or via the network 400, and is stored in the non-volatile storage device 3 which is a non-transitory storage medium. Therefore, the charging management system 100 may have an interface for reading data from the removable medium.

The charging management system 100 is a computer system configured on one physical computer or on a plurality of logically or physically configured computers, and may operate on a virtual computer configured on a plurality of physical computer resources. For example, subprograms configuring the total path charging amount estimation unit 102 may each operate on separate physical or logical computers, or a plurality of subprograms may be combined to operate on a single physical or logical computer.

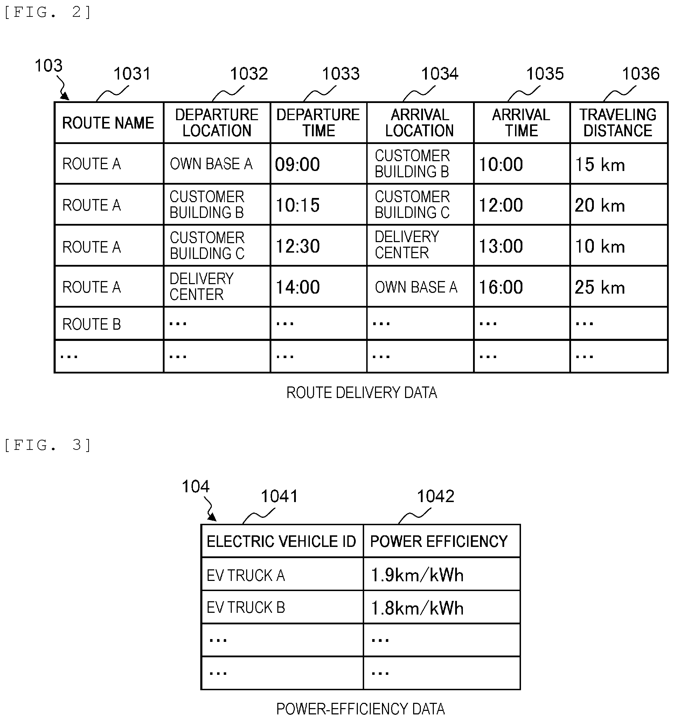

Fig. 2 is an explanatory diagram illustrating an example of a configuration of the route delivery data 104 according to the first embodiment of the present invention.

The route delivery data 104 includes a route name 1031, a departure location 1032, a departure time 1033, an arrival location 1034, an arrival time 1035, and a traveling distance 1036 in one record. The route delivery data 104 stores data representing the delivery route collected from the delivery planning system 201.

A route name 1021 is an identifier of the route. The departure location 1032 is an identifier representing the departure location of the logistics truck. The departure time 1033 is the time of departure from the departure location 1032. The arrival location 1034 is an identifier representing the arrival location of the logistics truck. The arrival time 1035 is the time of arrival at the arrival location 1034. The traveling distance 1036 is the traveling distance of the logistics truck from the departure location 1032 to the arrival location 1034.

For example, according to the first four records in Fig. 2, a logistics truck traveling a route A first leaves an own base A at 9:00, travels 15 km, and arrives at a customer building B at 10:00. Then, after staying at the customer building B for 15 minutes, the logistics truck leaves the customer building B at 10:15, travels 20 km, and arrives at a customer building C at 12:00. Then, after staying at the customer building C for 30 minutes, the logistics truck leaves the customer building C at 12:30, travels 10 km, and arrives at a distribution center at 13:00. Then, after staying at the distribution center for 60 minutes, the logistics truck leaves the distribution center at 14:00, travels 25 km, and arrives at the own base A at 16:00. That is, the route A is a route in which the logistics truck departs from the own base A at 9:00, passes through the customer building B, customer building C, and the distribution center, and returns to the own base A at 16:00.

Fig. 3 is an explanatory diagram illustrating an example of a configuration of the power-efficiency data 105 according to the first embodiment of the present invention.

The power-efficiency data 105 includes an electric vehicle ID 1041 and a power efficiency 1042 in one record. The power-efficiency data 105 stores data representing the power efficiency of the electric vehicle 202 traveling on the delivery route.

For example, the first record in Fig. 3 indicates that the power efficiency of the electric vehicle 202 identified by "EV truck A" among logistics trucks is 1.9 km/kWh (that is, the electric vehicle 202 travels 1.9 km per 1 kWh of power consumption amount).

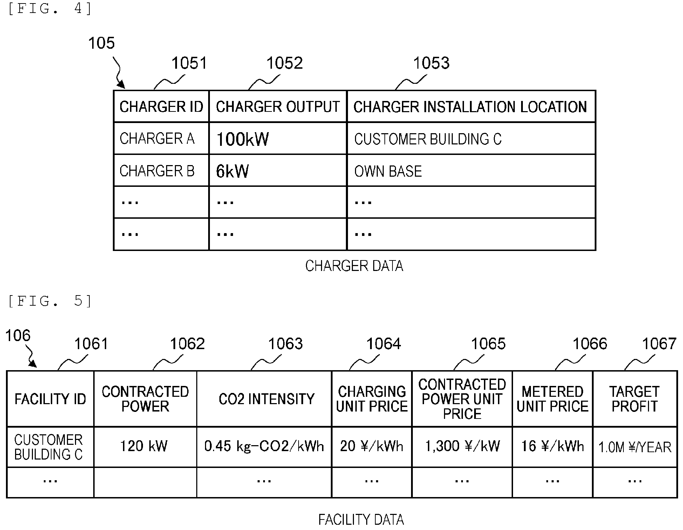

Fig. 4 is an explanatory diagram illustrating an example of a configuration of the charger data 106 according to the first embodiment of the present invention.

The charger data 106 includes a charger ID 1051, a charger output 1052, and a charger installation location 1053 in one record. The charger data 106 stores data representing the rated output value of the charger, the installation location of the charger, and the contracted power of the building in which the charger is installed. The charger ID 1051 is an identifier of the charger. The charger output 1052 is the rated output value of the installed charger. The charger installation location 1053 is an identifier representing the installation location of the charger.

In the example of Fig. 4, a charger A is installed in the customer building C and has a rated output of 100 kW. A charger B is installed at the own base and has a rated output of 6 kW.

Fig. 5 is an explanatory diagram illustrating an example of a configuration of the facility data 107 according to the first embodiment of the present invention.

The facility data 107 includes, in one record, a facility ID 1061, a contracted power 1062, a $CO_2$ intensity 1063, a charging unit price 1064, a contracted power unit price 1065, a metered unit price 1066, and a target profit 1067. The facility data 107 stores information about the power contract of a facility (for example, the building 300), a target profit for installing a charger, and data about the charging price for a charger user.

The facility ID 1061 is an identifier of the facility. The contracted power 1062 is an upper limit value of the power consumption that the facility has contracted with an electric power company. The $CO_2$ intensity 1063 is a conversion coefficient for calculating a $CO_2$ emission amount resulting from the power consumed by the facility. The charging unit price 1064 is a charging unit price charged to a user who uses the charger 301 installed at the facility. The contracted power unit price 1065 is a unit price per kW of power consumption that the facility has contracted with the electric power company. The metered unit price 1066 is a unit price per kWh of power consumption amount that the facility has contracted with the electric power company. The target profit 1067 is a target value of profit to be obtained by the charger 301 installed at the facility.

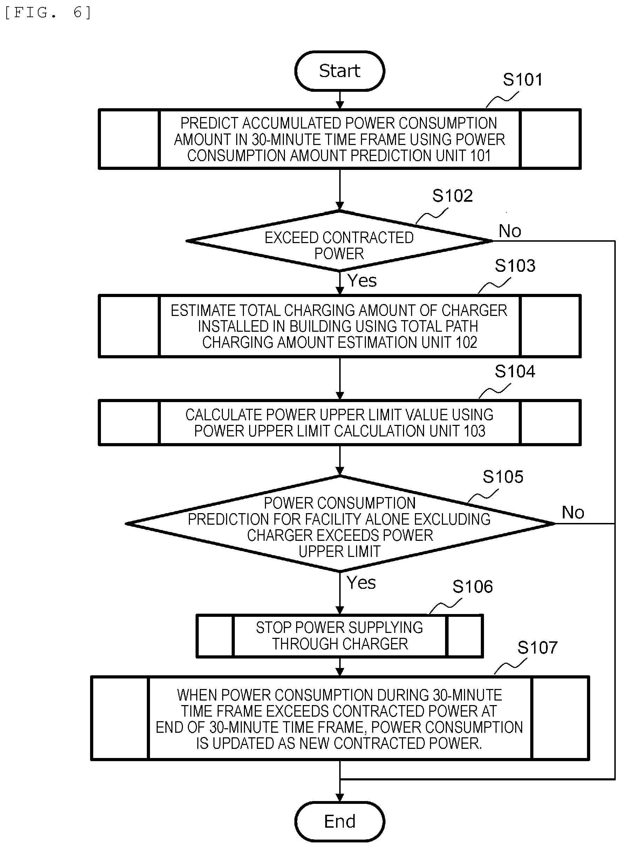

Fig. 6 is a flowchart illustrating processing in the charging management system 100 according to the first embodiment of the present invention. The charging management system 100 periodically executes the processing illustrated in Fig. 6 to manage the charging amount by the charger 301.

In step S101, the power consumption amount prediction unit 101 predicts the power consumption amount of the building 300 for a 30-minute time frame including the current time. For example, when the current time is 9:10, the power consumption amount from 9:00 to 9:30 is predicted. When the current time is 9:33, the power consumption amount from 9:30 to 10:00 is predicted. The power consumption amount predicted here is the sum of the power consumption amount of the building 300 itself (that is, the facility only) for the 30-minute time frame and the power consumption amount for charging by the charger 301 installed in the building 300.

In step S102, the contracted power 1062 of the facility data 107 is referenced to determine whether the power consumption amount in the 30-minute time frame predicted in step S101 exceeds the contracted power of the building 300 in which the charger 301 is installed. Here, the power consumption amount (kWh) in the 30-minute time frame is converted to power consumption (kW) for comparison with the contracted power. For example, when the power consumption amount in the 30-minute time frame predicted in step S101 is 10 kWh, 10 kWh / (30 minutes / 60 minutes) = 20 kW is compared with the contracted power. When the predicted power consumption amount exceeds, the process proceeds to step S103. When the predicted power consumption amount does not exceed, the process ends. When the predicted power consumption amount does not exceed the contracted power, the basic charge for electricity will not increase, so it can be said that there is no impact on the assumed balance. When the predicted power consumption amount exceeds, the contracted power charge will increase, which may worsen the profitability of the charging service. Therefore, to ensure the target profit, it is necessary to calculate an allowable upper limit value and control the charging amount so that the upper limit value is not exceeded.

In step S103, the total path charging amount estimation unit 102 estimates the total charging amount by the charger 301 installed in the building 300. Specifically, the total path charging amount estimation unit 102 uses the route delivery data 104 collected from the delivery planning system 201 to estimate the charging amount to be charged in the building 300 from a future delivery plan. For example, the total path charging amount estimation unit 102 estimates the total charging amount for the next few months.

In step S104, the power upper limit calculation unit 103 calculates a power upper limit value using the facility data 107 that stores the total charging amount estimated in step S103 and information related to the power contract of the building 300.

In step S105, it is determined whether the predicted value of power consumption of only the facility (building 300) excluding the power consumption of the charger 301 from the current time onward exceeds the power upper limit value. When the predicted value exceeds, the process proceeds to step S106. When the predicted value does not exceed, the process ends.

In step S106, the power supply by the charger 301 is stopped. In other words, the charging management system 100 stops the power supply by the charger 301 so that the power consumption in the building 300 does not exceed the power upper limit value calculated in step S104.

In step S107, when the power consumption during the 30-minute time frame exceeds the contracted power at the end of the 30-minute time frame, the charging management system 100 sets the power consumption as new contracted power and updates the value of the contracted power 1062.

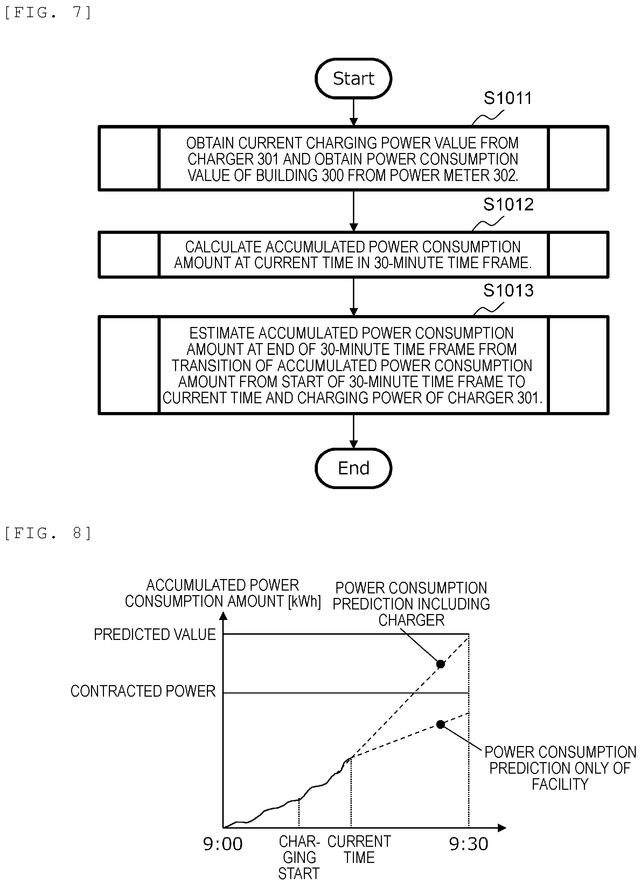

Fig. 7 is a flowchart illustrating a detail of processing of the power consumption amount prediction unit 101 according to the first embodiment of the present invention. The power consumption amount prediction unit 101 receives the charging power from the charger 301 and the total power consumption of the building from the power meter 302 as input, and outputs a predicted value of the power consumption amount for a 30-minute time frame.

In step S1011, the power consumption amount prediction unit 101 obtains the current charging power value from the charger 301 and the power consumption value of the building 300 from the power meter 302.

In step S1012, the power consumption amount prediction unit 101 calculates the accumulated power consumption amount at the current time in the 30-minute time frame.

In step S1013, the power consumption amount prediction unit 101 estimates the accumulated power amount at the end of the 30-minute time frame from the transition in the accumulated power consumption amount from the start of the 30-minute time frame to the current time and the charging power of the charger 301. Here, the power consumption amount prediction unit 101 estimates the power consumption amount including the power consumption amount of charging by the charger 301, and the power consumption amount only of the facility excluding the power consumption amount of charging by the charger 301, respectively.

Fig. 8 is an explanatory diagram illustrating an example of transition of the accumulated power consumption amount based on the power consumption collected from the charger 301 and the power meter 302 according to the first embodiment of the present invention.

The power consumption amount prediction unit 101 periodically executes the process illustrated in Fig. 7 to manage the accumulated power consumption amount at the current time within a 30-minute time frame and the transition thereof as illustrated in Fig. 8, and calculates a predicted value of the final accumulated power consumption amount within the 30-minute time frame. The example in Fig. 8 illustrates a status of the accumulated power consumption amount for the 30-minute time frame from 9:00 to 9:30. Here, the power consumption amount prediction unit 101 estimates both the power consumption amount including the power consumption amount of the charger and the power consumption amount only of the facility excluding the power consumption amount of the charger for a period from the current time within the 30-minute time frame onwards.

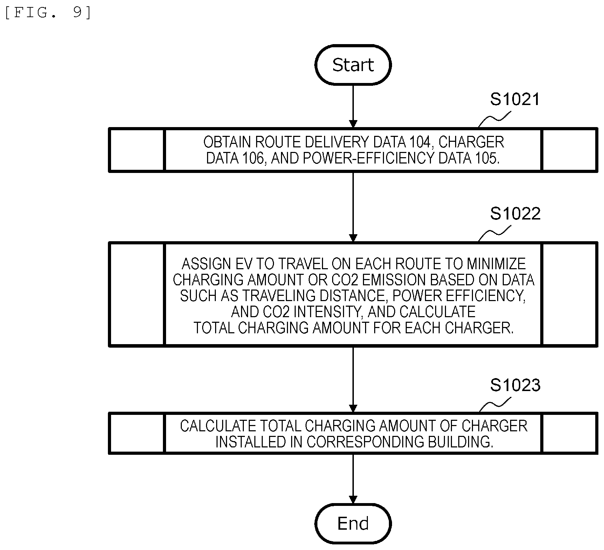

Fig. 9 is a flowchart illustrating a detail of the processing of the total path charging amount estimation unit 102 according to the first embodiment of the present invention. The total path charging amount estimation unit 102 calculates the future total charging amount of the charger 301 installed in the building 300.

In step S1021, the total path charging amount estimation unit 102 acquires the route delivery data 104, the charger data 106, and the power-efficiency data 105.

In step S1022, the total path charging amount estimation unit 102 assigns EVs to travel on each route to minimize the charging amount or CO2 emission based on data such as the traveling distance, power efficiency, and CO2 intensity, and calculates the charging amount for each charger 301.

In step S1023, the total path charging amount estimation unit 102 calculates the total charging amount of the chargers 301 installed in the corresponding building 300.

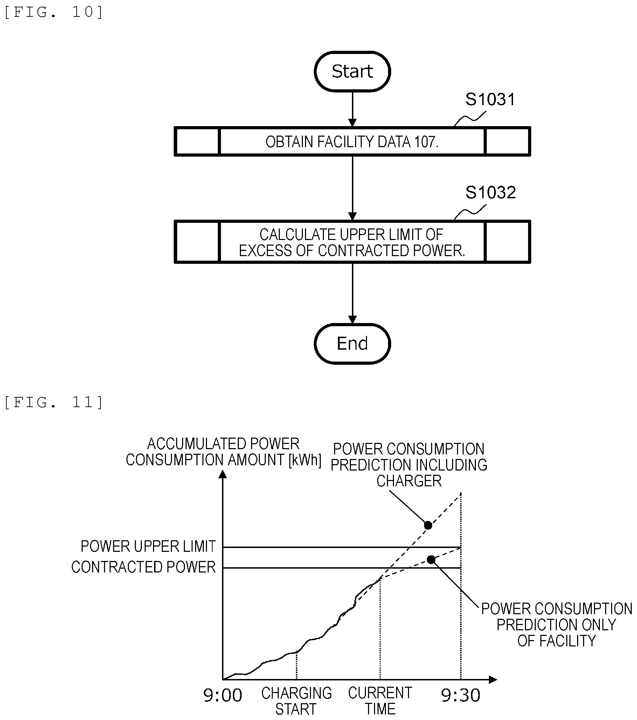

Fig. 10 is a flowchart illustrating a detail of the processing of the power upper limit calculation unit 103 in the first embodiment of the present invention. The power upper limit calculation unit 103 uses a charging amount x estimated by the total path charging amount estimation unit 102 to calculate an excess upper limit when the contracted power is exceeded.

In step S1031, the power upper limit calculation unit 103 acquires the facility data 107.

In step S1032, the power upper limit calculation unit 103 uses the charging amount x for the future year estimated by the total path charging amount estimation unit 102, a value J of the metered unit price 1066 obtained from the facility data 107, a value C of the charging unit price 1064, a value R of the annual target profit 1067, and a value K of the contracted power unit price 1065 to calculate an excess upper limit value a of the contracted power using Formula 1. When the accumulated power consumption amount for the 30-minute time frame exceeds the accumulated power consumption amount based on the current contracted power by continuing charging from the current time onward and the excess amount is a or more, the profit from the charging service will fall below the target profit 1067.

[Math 1]

$$a = \frac{(C-J)x - R}{12K} \cdots (1)$$

The above calculation is based on the assumption that the contracted power unit price K is determined based on the maximum power consumption for each month in the past year. In other words, when the power consumption in a certain month exceeds the value of the contracted power 1062 at that time, for the following year, even when the actual power consumption is low, the value of the contracted power 1062 is raised to a value based on the power consumption in that month, and the amount paid to a power provider based on the contracted power unit price K also increases. When there is a month in which the power consumption is even higher in that year, the contracted power 1062 for the following year is raised to match the power consumption at that time. One year is just an example of a predetermined period, and a period other than one year may be set depending on the contract with the power supplier.

Even when the power consumption in a certain month exceeds the contracted power at that time and results in an increase in the amount paid to the power provider for the following year, if the charging amount x over the following year is large, the profit based on a difference between the charging price C and the metered unit price J will be large, and as a result, it may be possible to secure the target profit R. Formula 1 described above is used to calculate the upper limit of the excess of the accumulated power consumption amount that can ensure the target profit R, based on the future charging amount x estimated at the current time. The larger the estimated future charging amount x, and the greater the difference between the charging price C and the metered unit price J, the higher the upper limit of the excess of the accumulated power consumption amount.

Fig. 11 is an explanatory diagram illustrating an example of a comparison between the predicted power consumption amount and the power upper limit value in the first embodiment of the present invention.

Specifically, Fig. 11 illustrates an example of a case where the power consumption is predicted in a 30-minute time frame and the power upper limit value is finally exceeded in step S105. That is, the power consumption prediction for only the facility excluding the power consumption by the charger 301 after the current time reaches the power upper limit. That is, the prediction result shows that when charging by the charger 301 is continued after the current time, the power consumption amount for the 30-minute time frame will exceed the power upper limit, but when charging by the charger 301 is stopped at the current time, the power consumption amount for the 30-minute time frame will not exceed the power upper limit even if the facility consumes power for the remaining time. By expecting the power consumption of the facility that cannot stop consuming power and determining that the power upper limit will be exceeded and stopping charging by the charger 301, the final power consumption can be prevented from exceeding the power upper limit (that is, the current contracted power + a), and thereby preventing a deterioration in the profitability of the charging service.

Conversely, when the predicted power consumption including the power consumption of the charger 301 does not exceed the power upper limit (current contracted power + a), there is no risk of damaging the profitability of the charging service even when charging is performed exceeding the contracted power. Even when the contracted power is exceeded, a user of the electric vehicle 202 who uses the charging service can charge as much as is necessary for driving as long as the power upper limit for ensuring profitability is not exceeded, which leads to improved convenience of the electric vehicle 202. To maximize the convenience of the electric vehicle 202 while ensuring a predetermined profitability, it is desirable to stop charging by the charger 301 at the latest time within a range where the predicted power consumption only at the facility excluding the power consumption by the charger 301 from the current time onward does not exceed the power upper limit.

[Second Embodiment]

In a second embodiment, a case where an energy management system is installed in the building 300 will be described. In the second embodiment, configurations different from those in the first embodiment will be described, and descriptions of configurations that are the same as those in the first embodiment will be omitted.

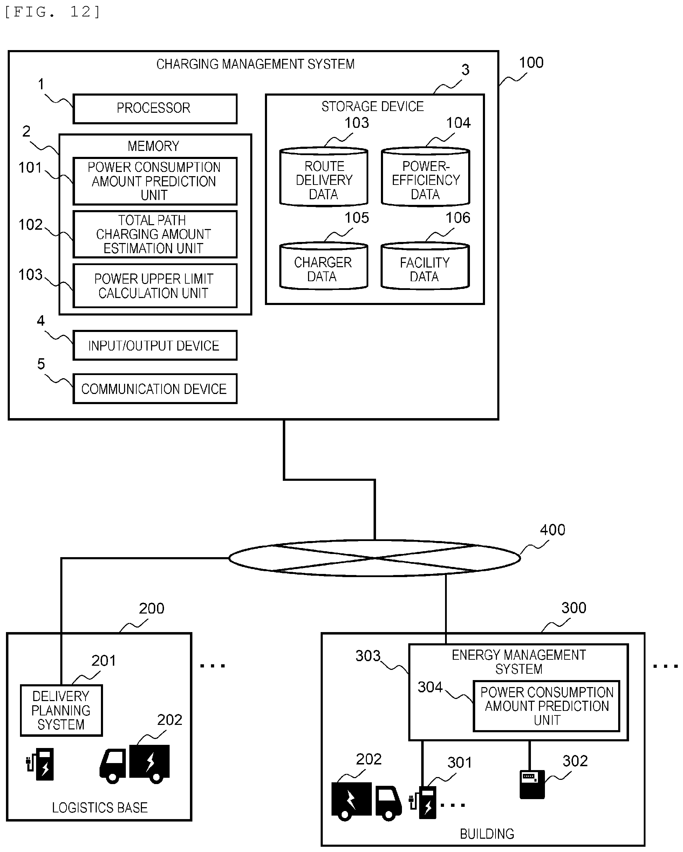

Fig. 12 is a block diagram illustrating an example of the charging management system 100 according to the second embodiment of the present invention.

When an energy management system 303 is installed in the building 300 as illustrated in Fig. 12, the charging management system 100 collects data regarding the power consumption of the charger 301 and the entire building 300 from the charger 301 and the power meter 302 via the energy management system 303.

Furthermore, when the energy management system 303 has a function equivalent to the function of the power consumption amount prediction unit 101, the charging management system 100 may obtain a predicted value of the power consumption amount from the energy management system 303.

[Third Embodiment]

In a third embodiment, a case where an impact on profit by continuing charging by the charger 301 from the current time onward is presented to an energy manager of the building, and decision to stop the power supply by the charger 301 is left to the energy manager will be described. In the third embodiment, configurations different from those in the embodiment described above will be described, and descriptions of configurations that are the same as those in the first embodiment will be omitted.

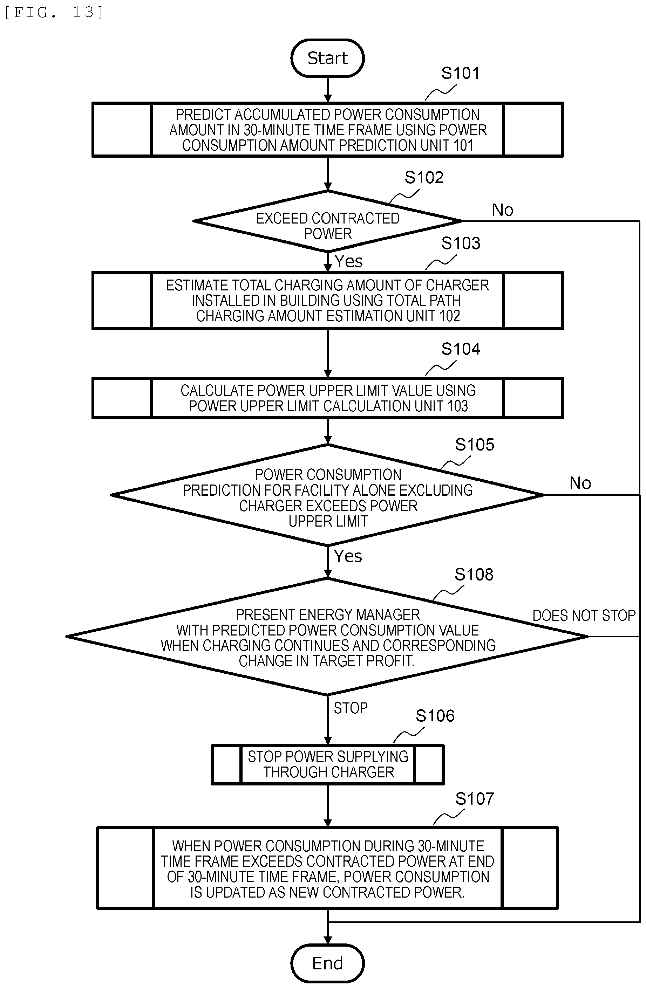

Fig. 13 is a flowchart illustrating processing in the charging management system 100 of the third embodiment of the present invention. In the processing, an impact on profit by continuing charging by the charger 301 from the current time onward, specifically, whether the power consumption amount will exceed the power upper limit by continuing charging by the charger 301 after the current time, and whether the target profit will be secured, are presented to the energy manager.

Steps S101 to S107 in Fig. 13 are the same as those illustrated in Fig. 6, and therefore will not be described repeatedly. In the processing of Fig. 13, when it is determined in step S105 that a predicted value of power consumption of only the facility (building 300) excluding the power consumption of the charger 301 from the current time onward exceeds the power upper limit, step S108 is executed. In step S108, the charging management system 100 presents the energy manager with the predicted value of power consumption when charging continues and the associated change in profit.

The energy manager decides whether to stop the power supply by the charger 301 based on the change in profit. For example, the energy manager may determine not to stop the power supply by the charger 301 while it is determined based on the change in profit that the target profit can be secured by stopping the power supply by the charger 301 from the current time onwards, and may determine to stop the power supply by the charger 301 when it is determined that the target profit cannot be secured even when the power supply by the charger 301 from the current time onward is stopped (or before such a determination is made). To maximize the convenience of the electric vehicle 202 while securing a predetermined profitability, it is desirable to determine to stop the power supply by the charger 301 at the latest time within a range in which the predicted power consumption of only the facility excluding the power consumption by the charger 301 from the current time onward does not exceed the power upper limit.

When the energy manager determines to stop the power supply by the charger 301, step S106 is executed. On the other hand, when the energy manager determines not to stop the power supply by the charger 301, the process ends.

The profit when charging continues is calculated using Formula 2. A value b is obtained by subtracting the current contracted power from the power consumption based on a predicted value of the power consumption amount including that of the charger 301.
[Math 2]

$$R = (C - J)x - 12bK \quad \cdots (2)$$

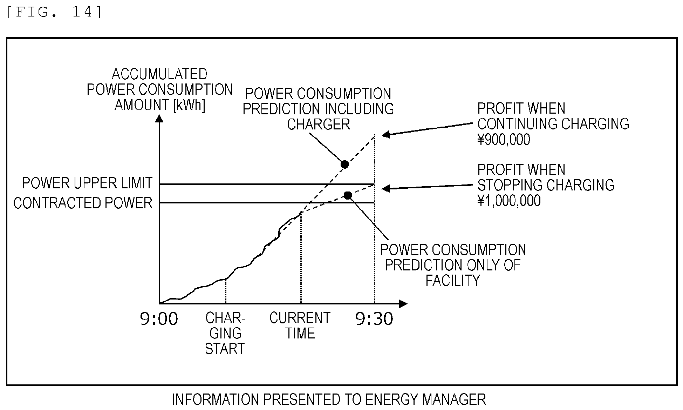

Fig. 14 is an explanatory diagram illustrating an example of information presented to the energy manager by the charging management system 100 according to the third embodiment of the present invention.

The charging management system 100 presents the energy manager with the expected profit when charging is stopped and the expected profit when charging is continued, and prompts the energy manager to decide whether to continue or stop charging. By quantitatively presenting the change in profit to the energy manager, it becomes possible for the energy manager to flexibly decide whether to continue charging.

The system according to the embodiment of the present invention may be configured as follows, for example.

(1) A charging management system (for example, the charging management system 100) including a processor (for example, the processor 1) and a storage device (for example, the memory 2 and the storage device 3), where the storage device holds delivery information (for example, the route delivery data 104) including a delivery plan for an electric vehicle (for example, the electric vehicle 202), power-efficiency information (for example, the power-efficiency data 105) for the electric vehicle, facility information (for example, the facility data 107) regarding facilities (for example, the building 300) included in a delivery route for the electric vehicle, and charger information (for example, the charger data 106) regarding a specification of a charger (for example, the charger 301) installed at the facility for charging the electric vehicle, the facility information includes a unit price (for example, the contracted power unit price 1065 and the metered unit price 1066) of a fee paid to a power supplier for power supplied to the facility, a charging price (for example, the charging unit price 1064) that is a unit price of a fee received from a charging power receiver for power provided by the charger installed at the facility to charge the electric vehicle, and a target value (for example, the target profit 1067) of profit obtained by providing power by the charger, and the processor estimates a charging amount by the charger for a predetermined future period based on the delivery information, the power-efficiency information, and the charger information (for example, step S103), and calculates an upper limit of a power consumption amount of the facility in a predetermined time frame (for example, the accumulated power consumption amount for a 30-minute time frame) including a current time based on the estimated charging amount and the facility information so that the target value of the profit is ensured (for example, step S104).

Accordingly, a building owner who provides a charging service can ensure the profitability of the service while improving convenience for a user who charges their electric vehicle.

(2) In (1) described above, the facility information includes contracted power (for example, the contracted power 1062) between the facility and the power supplier, and the processor predicts the power consumption amount of the facility including a power consumption amount of the charger for the predetermined time frame (for example, step S101), and estimates the charging amount and calculates an upper limit of the power consumption amount when (for example, when Yes in step S102) power consumption based on the predicted power consumption amount exceeds the contracted power.

Accordingly, the building owner who provides the charging service can ensure the profitability of the service even when the contracted power is expected to be exceeded, while improving the convenience of a user who charges their electric vehicle.

(3) In (2) described above, the processor controls the charger to stop charging when it is determined that the power consumption amount of the facility in the predetermined time frame exceeds the upper limit even when charging by the charger from the current time onward is stopped (for example, step S106 when the answer is Yes in step S105 in Fig. 5).

Accordingly, a decline in the profitability of the service can be prevented.

(4) In (2) described above, the processor calculates and outputs an amount of profit obtained by providing power by the charger in each case of when the charger stops charging from the current time onward and when the charger does not stop charging (for example, step S108 in Fig. 13), and when information instructing that charging by the charger be stopped is input, the charger is controlled to stop charging (for example, step S106 when the answer is "Stop" in step S108 in Fig. 13).

Accordingly, the user can flexibly determine whether to continue charging while being presented with information about the profitability of the service.

(5) In (2) described above, the unit price of the fee paid to the power supplier for the power supplied to the facility includes a metered unit price (for example, the metered unit price 1066) for determining a fee according to a power consumption amount of the facility, and a contracted power unit price (for example, the contracted power unit price 1065) for determining a fee according to the contracted power, and the processor calculates an amount of profit obtained by providing power by the charger so that the profit increases as a difference between the metered unit price and the charging price multiplied by the estimated charging amount increases, and the profit decreases as the contracted power unit price increases (for example, Formula 1).

Accordingly, it is possible to appropriately calculate the upper limit of power consumption amount that does not impair the profitability of the service.

The present invention is not limited to the above-described embodiments, and includes various modified examples. For example, the above-described embodiments are described in detail to provide a better understanding of the present invention, and are not necessarily limited to those having all of the configurations described. It is also possible to replace part of the configuration of one embodiment with the configuration of another embodiment, and it is also possible to add the configuration of another embodiment to the configuration of one embodiment. It is also possible to add, delete, or replace part of the configuration of each embodiment with other configurations.

Furthermore, the above-described configurations, functions, processing units, processing means, and the like may be realized in hardware, for example by designing some or all of the above-described configurations and the like as an integrated circuit. The above-described configurations, functions, and the like may be realized in software by a processor interpreting and executing a program that realizes each function. Information such as programs, tables, files, and the like that realize each function can be stored in storage devices such as a non-volatile semiconductor memory, a hard disk drive, and a solid state drive (SSDs), or in computer-readable non-transitory data storage media such as an IC card, an SD card, and DVD.

In addition, the control lines and information lines illustrated are those considered necessary for the description, and not all control lines and information lines in the product are necessarily illustrated. In reality, it can be considered that almost all components are interconnected.

**Claims**

1. A charging management system comprising:

    a processor and a storage device, wherein
    the storage device holds delivery information including a delivery plan for an electric vehicle, power-efficiency information for the electric vehicle, facility information regarding facilities included in a delivery route for the electric vehicle, and charger information regarding a specification of a charger installed at the facility for charging the electric vehicle,
    the facility information includes a unit price of a fee paid to a power supplier for power supplied to the facility, a charging price that is a unit price of a fee received from a charging power receiver for power provided by the charger installed at the facility to charge the electric vehicle, and a target value of profit obtained by providing power by the charger, and

the processor
estimates a charging amount by the charger for a predetermined future period based on the delivery information, the power-efficiency information, and the charger information, and calculates an upper limit of a power consumption amount of the facility in a predetermined time frame including a current time based on the estimated charging amount and the facility information so that the target value of the profit is ensured.

2. The charging management system according to Claim 1, wherein

the facility information includes contracted power between the facility and the power supplier, and
the processor
predicts the power consumption amount of the facility including a power consumption amount of the charger for the predetermined time frame, and
estimates the charging amount and calculates an upper limit of the power consumption amount when power consumption based on the predicted power consumption amount exceeds the contracted power.

3. The charging management system according to Claim 2, wherein
the processor controls the charger to stop charging when it is determined that the power consumption amount of the facility in the predetermined time frame exceeds the upper limit even when charging by the charger from the current time onward is stopped.

4. The charging management system according to Claim 2, wherein

the processor calculates and outputs an amount of profit obtained by providing power by the charger in each case of when the charger stops charging from the current time onward and when the charger does not stop charging, and
when information instructing that charging by the charger be stopped is input, the charger is controlled to stop charging.

5. The charging management system according to Claim 2, wherein

the unit price of the fee paid to the power supplier for the power supplied to the facility includes a metered unit price for determining a fee according to the power consumption amount of the facility, and a contracted power unit price for determining a fee according to the contracted power, and
the processor calculates an amount of profit obtained by providing power by the charger so that the profit increases as a difference between the metered unit price and the charging price multiplied by the estimated charging amount increases, and the profit decreases as the contracted power unit price increases.

6. A charging management method executed by a charging management system, wherein

the charging management system includes a processor and a storage device,
the storage device holds delivery information including a delivery plan for an electric vehicle, power-efficiency information for the electric vehicle, facility information regarding facilities included in a delivery route for the electric vehicle, and charger information regarding a specification of a charger installed at the facility for charging the electric vehicle,
the facility information includes a unit price of a fee paid to a power supplier for power supplied to the facility, a charging price that is a unit price of a fee received from a charging power receiver for power provided by the charger installed at the facility to charge the electric vehicle, and a target value of profit obtained by providing power by the charger, and
the charging management method includes
a first step in which the processor estimates a charging amount by the charger for a predetermined future period based on the delivery information, the power-efficiency information, and the charger information, and
a second step in which the processor calculates an upper limit of a power consumption amount of the facility in a predetermined time frame including a current time based on the estimated charging amount and the facility information so that the target value of the profit is ensured.

7. The charging management method according to Claim 6, wherein

the facility information includes contracted power between the facility and the power supplier,
the charging management method further includes a step of in which the processor predicts the power consumption amount of the facility including a power consumption amount of the charger for the predetermined time frame, and
the processor executes the first step and the second step when power consumption based on the predicted power consumption amount exceeds the contracted power.

8. The charging management method according to Claim 7, further comprising:
a step in which the processor controls the charger to stop charging when the processor determines that the power consumption amount of the facility in the predetermined time frame exceeds the upper limit even when charging by the charger from the current time onward is stopped.

9. The charging management method according to Claim 7, further comprising:

   a step in which the processor calculates and outputs an amount of profit obtained by providing power by the charger in each case of when the charger stops charging from the current time onward and when the charger does not stop charging; and
   a step in which, when information instructing that charging by the charger be stopped is input, the processor controls the charger to stop charging.

10. The charging management method according to Claim 7, wherein

   the unit price of the fee paid to the power supplier for the power supplied to the facility includes a metered unit price for determining a fee according to the power consumption amount of the facility, and a contracted power unit price for determining a fee according to the contracted power, and
   in the second step, the processor calculates an amount of profit obtained by providing power by the charger so that the profit increases as a difference between the metered unit price and the charging price multiplied by the estimated charging amount increases, and the profit decreases as the contracted power unit price increases.

[FIG. 1]

CHARGING MANAGEMENT SYSTEM

100

1 PROCESSOR

3 STORAGE DEVICE

2 MEMORY

101 POWER CONSUMPTION AMOUNT PREDICTION UNIT

102 TOTAL PATH CHARGING AMOUNT ESTIMATION UNIT

103 POWER UPPER LIMIT CALCULATION UNIT

104 ROUTE DELIVERY DATA

105 POWER-EFFICIENCY DATA

106 CHARGER DATA

107 FACILITY DATA

4 INPUT/OUTPUT DEVICE

5 COMMUNICATION DEVICE

400

200

201 DELIVERY PLANNING SYSTEM

202

LOGISTICS BASE

300

202

301

302

BUILDING

[FIG. 2]

| ROUTE NAME | DEPARTURE LOCATION | DEPARTURE TIME | ARRIVAL LOCATION | ARRIVAL TIME | TRAVELING DISTANCE |
|---|---|---|---|---|---|
| ROUTE A | OWN BASE A | 09:00 | CUSTOMER BUILDING B | 10:00 | 15 km |
| ROUTE A | CUSTOMER BUILDING B | 10:15 | CUSTOMER BUILDING C | 12:00 | 20 km |
| ROUTE A | CUSTOMER BUILDING C | 12:30 | DELIVERY CENTER | 13:00 | 10 km |
| ROUTE A | DELIVERY CENTER | 14:00 | OWN BASE A | 16:00 | 25 km |
| ROUTE B | ... | ... | ... | ... | ... |
| ... | ... | ... | ... | ... | ... |

103 1031 1032 1033 1034 1035 1036

ROUTE DELIVERY DATA

[FIG. 3]

| ELECTRIC VEHICLE ID | POWER EFFICIENCY |
|---|---|
| EV TRUCK A | 1.9km/kWh |
| EV TRUCK B | 1.8km/kWh |
| ... | ... |
| ... | ... |

104 1041 1042

POWER-EFFICIENCY DATA

[FIG. 4]

105 1051 1052 1053

| CHARGER ID | CHARGER OUTPUT | CHARGER INSTALLATION LOCATION |
|---|---|---|
| CHARGER A | 100kW | CUSTOMER BUILDING C |
| CHARGER B | 6kW | OWN BASE |
| ... | ... | ... |
| ... | ... | ... |

CHARGER DATA

[FIG. 5]

106 1061 1062 1063 1064 1065 1066 1067

| FACILITY ID | CONTRACTED POWER | $CO_2$ INTENSITY | CHARGING UNIT PRICE | CONTRACTED POWER UNIT PRICE | METERED UNIT PRICE | TARGET PROFIT |
|---|---|---|---|---|---|---|
| CUSTOMER BUILDING C | 120 kW | 0.45 kg-CO2/kWh | 20 ¥/kWh | 1,300 ¥/kW | 16 ¥/kWh | 1.0M ¥/YEAR |
| ... | | ... | ... | ... | ... | ... |

FACILITY DATA

[FIG. 6]

```
                          ┌─────────┐
                          │  Start  │
                          └─────────┘
                               │
                               ▼                                 S101
   ┌───┬───────────────────────────────────────────────┬───┐
   │   │  PREDICT ACCUMULATED POWER CONSUMPTION         │   │
   │   │  AMOUNT IN 30-MINUTE TIME FRAME USING POWER     │   │
   │   │  CONSUMPTION AMOUNT PREDICTION UNIT 101         │   │
   └───┴───────────────────────────────────────────────┴───┘
                               │
                               ▼                          S102
                         ◇───────────────◇                        No
                        EXCEED CONTRACTED   ──────────────────┐
                             POWER                            │
                         ◇───────────────◇                    │
                               │ Yes                S103       │
   ┌───┬───────────────────────────────────────────────┬───┐ │
   │   │  ESTIMATE TOTAL CHARGING AMOUNT OF CHARGER     │   │ │
   │   │  INSTALLED IN BUILDING USING TOTAL PATH        │   │ │
   │   │  CHARGING AMOUNT ESTIMATION UNIT 102           │   │ │
   └───┴───────────────────────────────────────────────┴───┘ │
                               │                     S104       │
   ┌───┬───────────────────────────────────────────────┬───┐ │
   │   │  CALCULATE POWER UPPER LIMIT VALUE USING       │   │ │
   │   │  POWER UPPER LIMIT CALCULATION UNIT 103        │   │ │
   └───┴───────────────────────────────────────────────┴───┘ │
                               │                     S105       │
                         ◇───────────────◇                     │
                       POWER CONSUMPTION                 No     │
                  PREDICTION FOR FACILITY ALONE EXCLUDING ──────┤
                       CHARGER EXCEEDS POWER                    │
                           UPPER LIMIT                          │
                         ◇───────────────◇                     │
                               │ Yes           S106             │
                    ┌───┬─────────────────┬───┐                │
                    │   │ STOP POWER SUPPLYING│  │              │
                    │   │ THROUGH CHARGER   │   │              │
                    └───┴─────────────────┴───┘   S107          │
   ┌───┬───────────────────────────────────────────────┬───┐ │
   │   │  WHEN POWER CONSUMPTION DURING 30-MINUTE       │   │ │
   │   │  TIME FRAME EXCEEDS CONTRACTED POWER AT        │   │ │
   │   │  END OF 30-MINUTE TIME FRAME, POWER CONSUMPTION│   │ │
   │   │  IS UPDATED AS NEW CONTRACTED POWER.           │   │ │
   └───┴───────────────────────────────────────────────┴───┘ │
                               │ ◄──────────────────────────────┘
                               ▼
                          ┌─────────┐
                          │   End   │
                          └─────────┘
```

[FIG. 7]

```
                    ┌─────────┐
                    │  Start  │
                    └─────────┘
                         │
                         ▼                              S1011
┌──────┬──────────────────────────────────────────────┬──────┐
│      │  OBTAIN CURRENT CHARGING POWER VALUE FROM      │      │
│      │  CHARGER 301 AND OBTAIN POWER CONSUMPTION      │      │
│      │  VALUE OF BUILDING 300 FROM POWER METER 302.   │      │
└──────┴──────────────────────────────────────────────┴──────┘
                         │
                         ▼                              S1012
┌──────┬──────────────────────────────────────────────┬──────┐
│      │  CALCULATE ACCUMULATED POWER CONSUMPTION       │      │
│      │  AMOUNT AT CURRENT TIME IN 30-MINUTE TIME FRAME.│     │
└──────┴──────────────────────────────────────────────┴──────┘
                         │
                         ▼                              S1013
┌──────┬──────────────────────────────────────────────┬──────┐
│      │  ESTIMATE ACCUMULATED POWER CONSUMPTION        │      │
│      │  AMOUNT AT END OF 30-MINUTE TIME FRAME FROM    │      │
│      │  TRANSITION OF ACCUMULATED POWER CONSUMPTION   │      │
│      │  AMOUNT FROM START OF 30-MINUTE TIME FRAME TO   │      │
│      │  CURRENT TIME AND CHARGING POWER OF CHARGER 301.│     │
└──────┴──────────────────────────────────────────────┴──────┘
                         │
                         ▼
                    ┌─────────┐
                    │   End   │
                    └─────────┘
```

[FIG. 8]

[FIG. 9]

```
                        ┌─────────┐
                        │  Start  │
                        └─────────┘
                             │
                             ▼                    S1021
        ┌──────────────────────────────────────────┐
        │  OBTAIN ROUTE DELIVERY DATA 104, CHARGER  │
        │  DATA 106, AND POWER-EFFICIENCY DATA 105. │
        └──────────────────────────────────────────┘
                             │
                             ▼                    S1022
        ┌──────────────────────────────────────────┐
        │  ASSIGN EV TO TRAVEL ON EACH ROUTE TO     │
        │  MINIMIZE CHARGING AMOUNT OR CO2 EMISSION │
        │  BASED ON DATA SUCH AS TRAVELING DISTANCE,│
        │  POWER EFFICIENCY, AND CO2 INTENSITY, AND │
        │  CALCULATE TOTAL CHARGING AMOUNT FOR      │
        │  EACH CHARGER.                            │
        └──────────────────────────────────────────┘
                             │
                             ▼                    S1023
        ┌──────────────────────────────────────────┐
        │  CALCULATE TOTAL CHARGING AMOUNT OF       │
        │  CHARGER INSTALLED IN CORRESPONDING       │
        │  BUILDING.                                │
        └──────────────────────────────────────────┘
                             │
                             ▼
                        ┌─────────┐
                        │   End   │
                        └─────────┘
```

[FIG. 10]

[FIG. 11]

[FIG. 12]

[FIG. 13]

```
                           ( Start )
                              |
                              |                    S101
                              v
   +--------------------------------------------------------+
   |   | PREDICT ACCUMULATED POWER CONSUMPTION          |   |
   |   | AMOUNT IN 30-MINUTE TIME FRAME USING POWER     |   |
   |   | CONSUMPTION AMOUNT PREDICTION UNIT 101         |   |
   +--------------------------------------------------------+
                              |
                              |            S102
                              v
                        /---------------\              No
                       / EXCEED CONTRACTED \ --------------->
                       \      POWER        /
                        \-----------------/
                              | Yes       S103
                              v
   +--------------------------------------------------------+
   |   | ESTIMATE TOTAL CHARGING AMOUNT OF CHARGER     |   |
   |   | INSTALLED IN BUILDING USING TOTAL PATH        |   |
   |   | CHARGING AMOUNT ESTIMATION UNIT 102           |   |
   +--------------------------------------------------------+
                              |
                              |            S104
                              v
   +--------------------------------------------------------+
   |   | CALCULATE POWER UPPER LIMIT VALUE USING       |   |
   |   | POWER UPPER LIMIT CALCULATION UNIT 103        |   |
   +--------------------------------------------------------+
                              |
                              |            S105
                              v
               /------------------------------\           No
              /     POWER CONSUMPTION           \ ------------>
             / PREDICTION FOR FACILITY ALONE EXCLUDING \
             \ CHARGER EXCEEDS POWER                    /
              \          UPPER LIMIT           /
               \------------------------------/
                              | Yes
                              v            S108
               /------------------------------\
              /       PRESENT ENERGY MANAGER    \    DOES NOT STOP
             / WITH PREDICTED POWER CONSUMPTION VALUE \ ----------->
             \ WHEN CHARGING CONTINUES AND CORRESPONDING /
              \    CHANGE IN TARGET PROFIT.    /
               \------------------------------/
                              | STOP
                              |            S106
                              v
   +--------------------------------------------------------+
   |   | STOP POWER SUPPLYING                          |   |
   |   | THROUGH CHARGER                               |   |
   +--------------------------------------------------------+
                              |
                              |            S107
                              v
   +--------------------------------------------------------+
   |   | WHEN POWER CONSUMPTION DURING 30-MINUTE        |   |
   |   | TIME FRAME EXCEEDS CONTRACTED POWER AT END     |   |
   |   | OF 30-MINUTE TIME FRAME, POWER CONSUMPTION     |   |
   |   | IS UPDATED AS NEW CONTRACTED POWER.           |   |
   +--------------------------------------------------------+
                              |
                              v
                           ( End )
```

[FIG. 14]

ACCUMULATED
POWER CONSUMPTION
AMOUNT [kWh]

POWER CONSUMPTION
PREDICTION INCLUDING
CHARGER

PROFIT WHEN
CONTINUING CHARGING
¥900,000

PROFIT WHEN
STOPPING CHARGING
¥1,000,000

POWER UPPER LIMIT
CONTRACTED POWER

POWER CONSUMPTION
PREDICTION ONLY OF
FACILITY

9:00    CHAR-     CURRENT    9:30
        GING      TIME
        START

INFORMATION PRESENTED TO ENERGY MANAGER

## INTERNATIONAL SEARCH REPORT

| International application No. |
| --- |
| **PCT/JP2023/007576** |

**A. CLASSIFICATION OF SUBJECT MATTER**

*G06Q 50/06*(2012.01)i
FI:   G06Q50/06

According to International Patent Classification (IPC) or to both national classification and IPC

**B. FIELDS SEARCHED**

Minimum documentation searched (classification system followed by classification symbols)

G06Q10/00-99/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | WO 2019/146263 A1 (HONDA MOTOR CO., LTD.) 01 August 2019 (2019-08-01) entire text, all drawings | 1-10 |
| A | JP 2010-81722 A (HITACHI, LTD.) 08 April 2010 (2010-04-08) entire text, all drawings | 1-10 |
| A | WO 2020/255507 A1 (DENSO CORP.) 24 December 2020 (2020-12-24) entire text, all drawings | 1-10 |

☐ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **25 April 2023** | **16 May 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

INTERNATIONAL SEARCH REPORT
Information on patent family members

International application No.

**PCT/JP2023/007576**

| Patent document cited in search report | | | Publication date (day/month/year) | Patent family member(s) | | | Publication date (day/month/year) |
|---|---|---|---|---|---|---|---|
| WO | 2019/146263 | A1 | 01 August 2019 | CN | 111630533 | A | |
| | | | | entire text, all drawings | | | |
| | | | | TW | 201933263 | A | |
| JP | 2010-81722 | A | 08 April 2010 | US | 2010/0076825 | A1 | |
| | | | | entire text, all drawings | | | |
| WO | 2020/255507 | A1 | 24 December 2020 | US | 2022/0108248 | A1 | |
| | | | | entire text, all drawings | | | |
| | | | | CN | 113994407 | A | |

Form PCT/ISA/210 (patent family annex) (January 2015)

23

**EP 4 560 564 A1**

**Patent documents cited in the description**

- JP 2022114820 A

- JP 2018191471 A